# EUROPÄISCHE PATENTSCHRIFT

(11) **EP 1 691 216 B1**
(45) Veröffentlichungstag und Bekanntmachung des Hinweises auf die Patenterteilung: **10.07.2013**
(21) Anmeldenummer: 05101135.1
(22) Anmeldetag: 15.02.2005
(51) Int. Cl.: G01T 1/29

(54) **Radiographiesystem und Verfahren zur Aufzeichnung von Röntgenaufnahmen in Speicherleuchtstoffschichten**
Radiography system and method for recording X-Ray exposures on photostimulable sheets
Système radiographique et méthode d'enregistrement des radiographies dans des feuilles photostimulables

(43) Veröffentlichungstag der Anmeldung: 16.08.2006
(73) Patentinhaber: Agfa-Gevaert HealthCare GmbH, 50670 Köln (DE)
(72) Erfinder: Fasbender, Dr. Robert, 91054 Erlangen (DE); Frankenberger, Dr. Jörg, 85570 Markt Schwaben (DE); Herrmann, Dr. Clemens, 22299 Hamburg (DE); Mair, Dr. Stephan, 86157 Augsburg (DE); Scherer, Dr. Horst, 82008 Unterhaching (DE); Lamotte, Johann, 3110 Rotselaar (BE)
(74) Vertreter: Linsmeier, Josef

(56) Entgegenhaltungen:
- EP-A- 1 376 615
- US-A- 5 038 037
- US-A- 5 376 806

## Beschreibung

Die Erfindung betrifft ein Radiographiesystem sowie ein entsprechendes Verfahren zur Aufzeichnung von Röntgenaufnahmen in Speicherleuchtstoffschichten gemäß dem Oberbegriff von Anspruch 1 bzw. 15.

Eine Möglichkeit zur Aufzeichnung von Röntgenbildern besteht darin, die durch ein Objekt, beispielsweise einen Patienten, hindurch tretende Röntgenstrahlung als latentes Bild in einer so genannten Speicherleuchtstoffschicht zu speichern. Zum Auslesen des latenten Bildes wird die Speicherleuchtstoffschicht mit Stimulationslicht bestrahlt und dabei zur Aussendung von Emissionslicht angeregt. Das Emissionslicht, dessen Intensität dem in der Speicherleuchtstoffschicht gespeicherten Bild entspricht, wird von einem optischen Detektor erfasst und in elektrische Signale umgewandelt. Die elektrischen Signale werden nach Bedarf weiterverarbeitet und schließlich für eine Auswertung, insbesondere zu medizinisch-diagnostischen Zwecken, bereitgestellt, indem sie an einem entsprechenden Ausgabegerät, wie z. B. einem Monitor oder Drucker, ausgegeben werden.

Bei gattungsgemäßen Radiographiesystemen nach dem Stand der Technik wird nicht in allen Anwendungsfällen die für eine zuverlässige medizinische Diagnose erforderliche oder vorgeschriebene Bildqualität der aufgezeichneten Röntgenaufnahme erreicht.

Aus US 5,038,037 ist eine Vorrichtung bekannt, bei welcher die durch einen Patienten hindurch tretende Röntgenstrahlung in zwei hintereinander angeordneten, an beiden Seiten eines flexiblen Bandes oder eines Strahlungsumwandlungsfilters befindlichen Speicherleuchtstoffschichten gespeichert wird. Das flexible Band bzw. der Strahlungsumwandlungsfilter wandelt die Strahlungsenergie der durch die erste Speicherleuchtstoffschicht hindurch getretene Röntgenstrahlung um, so dass in der ersten Speicherleuchtstoffschicht ein Röntgenbild mit weicher Röntgenstrahlung und in der dahinter liegenden zweiten Speicherleuchtstoffschicht ein Röntgenbild ohne weiche Röntgenstrahlung aufgezeichnet wird.

Es ist Aufgabe der Erfindung, ein Radiographiesystem sowie ein entsprechendes Verfahren anzugeben, bei welchen eine möglichst hohe Bildqualität der aufgezeichneten Röntgenaufnahme erreicht wird.

Diese Aufgabe wird durch das Radiographiesystem gemäß Anspruch 1 sowie das entsprechende Verfahren gemäß Anspruch 15 gelöst.

Erfindungsgemäß ist eine Aufzeichnungssteuerung vorgesehen, welche die Aufzeichnungseinrichtung in der Weise steuert, dass in einer ersten Speicherleuchtstoffschicht, die eine erste Dicke aufweist, eine Röntgenaufnahme mit einer ersten Grenzenergie der Röntgenstrahlung aufgezeichnet wird und in einer zweiten Speicherleuchtstoffschicht, die eine zweite Dicke aufweist, die größer ist als die erste Dicke, eine Röntgenaufnahme mit einer zweiten Grenzenergie der Röntgenstrahlung aufgezeichnet wird, wobei die zweite Grenzenergie der Röntgenstrahlung größer ist als die erste Grenzenergie der Röntgenstrahlung.

Unter der Grenzenergie der Röntgenstrahlung ist hierbei die maximale Energie der Röntgenphotonen im Spektrum der jeweiligen Röntgenstrahlung zu verstehen. Der Wert der jeweiligen Grenzenergie der Röntgenphotonen (z.B. 50 keV) entspricht hierbei dem Wert der in der Röntgenröhre, in welcher die Röntgenstrahlung erzeugt wird, eingestellten Hochspannung (im Beispiel also 50 kV).

Die Erfindung basiert auf dem Gedanken, die spektrale Energieverteilung der Röntgenphotonen der Röntgenstrahlung bei der Aufzeichnung einer Röntgenaufnahme in Abhängigkeit von der Dicke der verwendeten Speicherleuchtstoffschicht zu wählen. Die Wahl der Energieverteilung erfolgt hierbei durch Einstellung einer entsprechenden Hochspannung an der Röntgenröhre.

Durch die erfindungsgemäße Steuerung des Radiographiesystems in Abhängigkeit von der Dicke der bei der Aufzeichnung verwendeten Speicherleuchtstoffschicht wird eine verbesserte Anpassung der Aufzeichnungsbedingungen sowie der Dicke der Speicherleuchtstoffschicht an die jeweilige medizinische Anwendung, die auch Applikation genannt wird, erreicht. Auf diese Weise kann für unterschiedliche Applikationen eine jeweils optimale Bildqualität erzielt werden. Unterschiedliche Applikationen sind z.B. Röntgenaufnahmen von Extremitäten, des Schädels, der Wirbelsäule, des Thorax, des Abdomens oder des Beckens.

Vorzugsweise liegt die erste Grenzenergie der Röntgenstrahlung des Radiographiesystems im Bereich zwischen 40 und 70 keV. Bei diesen Grenzenergien wird in der ersten Speicherleuchtstoffschicht ein Röntgenbild gespeichert, welches beim Auslesen trotz der geringeren Dicke der Speicherleuchtstoffschicht eine relativ hohe Intensität des Emissionslichts und somit ein hohes Signal/Rausch-Verhältnis zu Folge hat.

Die zweite Grenzenergie der Röntgenstrahlung des Radiographiesystems liegt vorzugsweise im Bereich zwischen 70 und 150 keV. Bei diesen Grenzenergien wird in der zweiten Speicherleuchtstoffschicht ein Röntgenbild gespeichert, welches beim Auslesen wegen der größeren Dicke der Speicherleuchtstoffschicht eine ebenfalls relativ hohe Intensität des Emissionslichts und somit ein hohes Signal/Rausch-Verhältnis zu Folge hat.

Es ist bevorzugt, dass die erste Dicke der ersten Speicherleuchtstoffschicht zwischen 100 und 750 µm liegt. Bei Speicherleuchtstoffschichten in diesem Dickenbereich wird die Bildschärfe durch Streuung von Stimulationslicht in der Schicht nur relativ geringfügig beeinträchtigt, gleichzeitig aber eine ausreichend hohe Intensität des von der Speicherleuchtstoffschicht ausgesandten Emissionslichts erreicht. Dies wirkt sich insgesamt positiv auf die Bildqualität aus.

Die zweite Dicke der zweiten Speicherleuchtstoffschicht liegt zwischen 750 und 1000 µm. Mit Speicherleuchtstoffschichten in diesem Dickenbereich können in Anwendungsfällen, in welchen auf eine besonders hohe Bildschärfe verzichtet werden kann, Bilddaten mit einem besonders günstigen Signal/Rausch-Verhältnis und Kontrast erhalten werden.

Vorzugsweise weist die eingesetzte erste und/oder zweite Speicherleuchtstoffschicht nadelförmige Speicherleuchtstoffstrukturen auf. Solche Speicherleuchtstoffschichten werden auch als Needle Image Plates (NIP) bezeichnet und liefern Bilddaten mit hervorragendem Signal/Rausch-Verhältnis und hoher Bildschärfe.

Bei einer Weiterbildung des erfindungsgemäßen Radiographiesystems wird die Aufzeichnungseinrichtung durch die Aufzeichnungssteuerung derart gesteuert, dass in der ersten Speicherleuchtstoffschicht eine Röntgenaufnahme mit einer ersten Intensität der Röntgenstrahlung aufgezeichnet wird und in der zweiten Speicherleuchtstoffschicht eine Röntgenaufnahme mit einer zweiten Intensität der Röntgenstrahlung aufgezeichnet wird, wobei die zweite Intensität der Röntgenstrahlung kleiner ist als die erste Intensität der Röntgenstrahlung. Bei Röntgenaufnahmen in Speicherleuchtstoffschichten mit der zweiten Dicke werden die zu untersuchenden Patienten daher geringeren Strahlendosen ausgesetzt, wobei gleichzeitig eine hohe Bildqualität gewährleistet wird.

Eine bevorzugte Variante des Radiographiesystems umfasst eine Auslesevorrichtung zum Auslesen der in den Speicherleuchtstoffschichten gespeicherten Röntgenaufnahmen und eine Auslesesteuerung zur Steuerung der Auslesevorrichtung derart, dass die erste Speicherleuchtstoffschicht von der in einem ersten Auslesemodus gesteuerten Auslesevorrichtung ausgelesen wird und die zweite Speicherleuchtstoffschicht von der in einem zweiten Auslesemodus gesteuerten Auslesevorrichtung ausgelesen wird, wobei der zweite Auslesemodus von dem ersten Auslesemodus verschieden ist.

Diese Variante der Erfindung basiert auf dem Gedanken, die Auslesevorrichtung in Abhängigkeit von der Dicke der auszulesenden Speicherleuchtstoffschicht steuern. Dies wird dadurch erreicht, dass zumindest ein Teil der beim Auslesen der Speicherleuchtstoffschicht gewählten Scanparameter der Auslesevorrichtung in Abhängigkeit von der Dicke der jeweils auszulesenden Speicherleuchtstoffschicht eingestellt wird. Bei den Scanparametern handelt es sich vorzugsweise um
- die Größe der Bildpunkte des ausgelesenen Röntgenbildes,
- die Pulsdauer und/oder Intensität des Stimulationslichts,
- die Breite des Fokusbereichs des Stimulationslichts auf der Speicherleuchtstoffschicht,
- die Integrationsdauer bzw. Samplingrate des Detektors oder
- die Vorschubdauer des Detektors bzw. die Relativgeschwindigkeit, mit welcher die Auslesevorrichtung und die Speicherleuchtstoffschicht während des Auslesens relativ zueinander bewegt werden.

Die im ersten Auslesemodus eingestellten Scanparameter unterscheiden sich von den im zweiten Auslesemodus eingestellten Scanparametern in mindestens einem Scanparameter. Dies bedeutet, dass zumindest ein Scanparameter im ersten Auslesemodus einen anderen Wert aufweist als im zweiten Auslesemodus.

Durch die genannte Steuerung der Scanparameter der Auslesevorrichtung in Abhängigkeit von der Dicke der auszulesenden Speicherleuchtstoffschicht wird eine verbesserte Anpassung sowohl der Auslesebedingungen als auch der Dicke der Speicherleuchtstoffschicht an die jeweilige medizinische Applikation ermöglicht. Auf diese Weise kann für unterschiedliche Applikationen eine jeweils optimale Bildqualität erzielt werden. Unterschiedliche Applikationen sind z.B. Röntgenaufnahmen von Extremitäten, des Schädels, der Wirbelsäule, des Thorax, des Abdomens oder des Beckens.

Vorzugsweise kann die Auslesevorrichtung beim Auslesen einer Speicherleuchtstoffschicht ein aus einer Vielzahl von Bildpunkten, die auch als Pixel bezeichnet werden, zusammengesetztes Bild erzeugen, wobei die Größe der erzeugten Bildpunkte im ersten Auslesemodus kleiner ist als im zweiten Auslesemodus. Hierdurch wird die Auflösung des erhaltenen Bildes erhöht und die Bildqualität weiter verbessert.

Die Auslesevorrichtung weist eine Bestrahlungseinrichtung zur Bestrahlung einer Speicherleuchtstoffschicht mit Stimulationslicht auf, welches die Speicherleuchtstoffschicht zur Aussendung von Emissionslicht anregen kann. Außerdem umfasst die Auslesevorrichtung einen Detektor zur Erfassung von in der Speicherleuchtstoffschicht angeregtem Emissionslicht, wobei der Detektor und die Speicherleuchtstoffschicht relativ zueinander bewegt werden können.

Vorzugsweise wird die Bestrahlungseinrichtung durch die Auslesesteuerung derart gesteuert, dass die Bestrahlungseinrichtung Stimulationslichtpulse mit einer bestimmten Pulsdauer aussendet, wobei die Pulsdauer der Stimulationslichtpulse im ersten Auslesemodus kürzer ist als im zweiten Auslesemodus. Auf diese Weise wird bei jedem Auslesen eines Bildpunktes, insbesondere einer Zeile von Bildpunkten, im ersten Auslesemodus ein kleinerer Teilbereich der Speicherleuchtstoffschicht von dem Stimulationslicht überstrichen als im zweiten Auslesemodus. Entsprechend kleiner sind die angeregten Teilbereiche der Speicherleuchtstoffschicht. Die Größe der angeregten Teilbereiche kann somit an die erforderliche Größe der Bildpunkte angepasst werden.

Es ist außerdem von Vorteil, die Bestrahlungseinrichtung durch die Auslesesteuerung derart zu steuern, dass die Intensität des Stimulationslichts im ersten Auslesemodus kleiner ist als die Intensität des Stimulationslichts im zweiten Auslesemodus. Hierdurch wird im ersten Auslesemodus eine Streuung des Stimulationslichts innerhalb der Speicherleuchtstoffschicht im Vergleich zum zweiten Auslesemodus vermindert, so dass eine höhere Bildschärfe erzielt wird. Dies gilt insbesondere für sog. Powder Image Plates (PIP). Bei solchen PIP werden die Speicherleuchtstoffpartikel, die eine im Wesentlichen isotrope Form aufweisen, in Pulverform mit einem Bindemittel vermischt und zu einer Schicht verarbeitet.

Vorzugsweise ist eine Fokussiereinrichtung zur Fokussierung des Stimulationslichts auf die Speicherleuchtstoffschicht vorgesehen, wobei das Stimulationslicht in einem, insbesondere linienförmigen, Fokusbereich auf die Speicherleuchtstoffschicht trifft und die Breite des Fokusbereichs im ersten Auslesemodus kleiner ist als im zweiten Auslesemodus. Auf diese Weise wird bei jedem Auslesen einzelner Bildpunkte, insbesondere einer ganzen Zeile von Bildpunkten, im ersten Auslesemodus ein kleinerer Teilbereich der Speicherleuchtstoffschicht von dem Stimulationslicht überstrichen als im zweiten Auslesemodus. Auch hierdurch wird die Bildschärfe erhöht.

In einem weiteren bevorzugten Beispiel wird der Detektor durch die Auslesesteuerung derart gesteuert, dass das Emissionslicht in einer Vielzahl von Zeitintervallen während der Relativbewegung erfasst wird, wobei die Zeitintervalle in ersten Auslesemodus kürzer sind als im zweiten Auslesemodus.

Im Fall eines Zeilendetektors, der eine Vielzahl von in einer Zeile angeordneten, lichtempfindlichen Elementen aufweist, handelt es sich bei den Zeitintervallen um die sog. Integrationsdauer, innerhalb welcher die lichtempfindlichen Elemente Licht erfassen und in entsprechende elektrische Signale umwandeln. Im Fall eines nicht ortsauflösenden Detektors, wie z.B. eines Photomultipliers, handelt es sich bei den Zeitintervallen um die Abtastdauer, innerhalb welcher das von dem Detektor erzeugte analoge Signal abgetastet wird. Die Abtastdauer ist der reziproke Wert der sog. Abtastfrequenz, die auch als Samplingrate bezeichnet wird.

Insgesamt wird hierdurch im ersten Auslesemodus eine hohe Auflösung bei gleichzeitig verminderten Rauschanteilen und verminderter Bewegungsunschärfe, welche von der Relativbewegung von Detektor und Speicherleuchtstoffschicht herrührt, erreicht und damit die Bildqualität weiter verbessert.

Vorzugsweise werden Detektor und Speicherleuchtstoffschicht mit einer Relativgeschwindigkeit relativ zueinander bewegt, wobei die Relativgeschwindigkeit im ersten Auslesemodus kleiner ist als im zweiten Auslesemodus. Auch hierdurch wird die Bewegungsunschärfe vermindert und gleichzeitig das Signal/Rausch-Verhältnis der erhaltenen Bilddaten verbessert.

Bei einer bevorzugten Variante des erfindungsgemäßen Radiographiesystems wird die Aufzeichnungseinrichtung durch die Aufzeichnungssteuerung derart gesteuert, dass in der ersten Speicherleuchtstoffschicht eine Röntgenaufnahme mit einer ersten Intensität der Röntgenstrahlung aufgezeichnet wird und in der zweiten Speicherleuchtstoffschicht eine Röntgenaufnahme mit einer zweiten Intensität der Röntgenstrahlung aufgezeichnet wird, wobei die zweite Intensität der Röntgenstrahlung kleiner ist als die erste Intensität der Röntgenstrahlung. Dies hat den Vorteil einer geringeren Strahlenexposition des zu untersuchenden Patienten bei gleichzeitig hoher Bildqualität.

Weitere bevorzugte Ausführungsformen der Erfindung werden nachfolgend anhand von in Figuren dargestellten Beispielen näher erläutert. Es zeigen:
- Fig. 1: eine erste Variante einer Auslesevorrichtung;
- Fig. 2: ein Beispiel für eine auszulesende Speicherleuchtstoffschicht;
- Fig. 3: eine zweite Variante einer Auslesevorrichtung; und
- Fig. 4: ein Beispiel für ein Radiographiesystem.

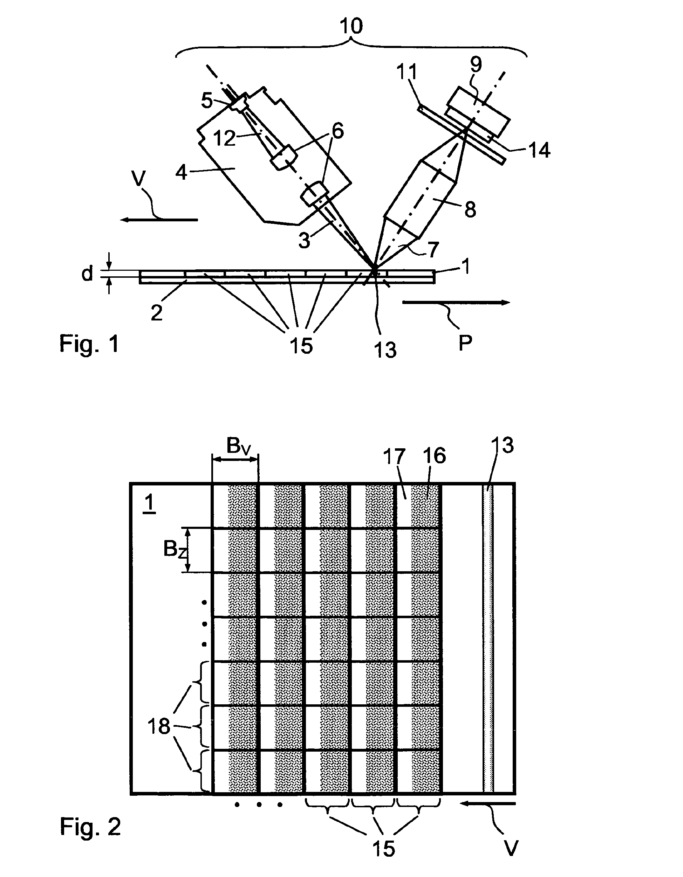

Figur 1 zeigt eine erste Variante einer Auslesevorrichtung, die im Folgenden auch als Scanner bezeichnet wird. Eine auszulesende Speicherleuchtstoffschicht 1, die eine Dicke d aufweist, befindet sich auf einer Trägerschicht 2 und wird mit Stimulationslicht 3 bestrahlt, welches von einer Lichtquelle 4 erzeugt wird. Das durch das Stimulationslicht 3 in der Speicherleuchtstoffschicht 1 angeregte Emissionslicht 7 wird mit einem Detektor 9 erfasst. Die Lichtquelle 4 und der Detektor 9, einschließlich einer Abbildungseinrichtung 8 und eines optischen Filters 11, bilden zusammen den Scanner 10, welcher während des Auslesens in Vorschubrichtung V relativ zur Speicherleuchtstoffschicht 1 bewegt wird.

Die Lichtquelle 4 weist mehrere einzelne Strahlungsquellen 5 sowie eine Fokussiereinrichtung 6 auf, welche die von den Strahlungsquellen 5 ausgehenden Stimulationslichtbündel 12 auf die Speicherleuchtstoffschicht 1 fokussieren. Die einzelnen Strahlungsquellen 5, beispielsweise Leuchtdioden oder Laserdioden, sind in einer senkrecht zur Figurenebene verlaufenden Zeile angeordnet.

Die Fokussiereinrichtung 6 weist zwei längliche Zylinderlinsen auf, welche im Wesentlichen parallel zu den in einer Zeile angeordneten einzelnen Strahlungsquellen 5 verlaufen. Die von den einzelnen Strahlungsquellen 5 ausgehenden divergenten Stimulationslichtbündel 12 werden durch die Fokussiereinrichtung 6 in Figurenebene gebündelt und treffen als konvergentes Strahlungsbündel des Stimulationslichts 3 auf die Speicherleuchtstoffschicht 1. Senkrecht zur Figurenebene überlagern sich die divergenten Stimulationslichtbündel 12 der einzelnen Strahlungsquellen 5 in der Weise, dass das konvergente Strahlungsbündel eine senkrecht zur Figurenebene verlaufende, kontinuierliche Stimulationslichtlinie 13 auf der Speicherleuchtstoffschicht 1 beschreibt.

Das im Bereich der Stimulationslichtlinie 13 in der Speicherleuchtstoffschicht 1 angeregte und abgestrahlte Emissionslicht 7 wird mit einem Detektor 9 ortsaufgelöst erfasst. Hierzu weist der Detektor 9 eine Vielzahl von lichtempfindlichen Detektorelementen 14 auf, welche entlang einer senkrecht zur Figurenebene verlaufenden Linie angeordnet sind. Das im Bereich der Stimulationslichtlinie 13 auf der Speicherleuchtstoffschicht 1 emittierte Emissionslicht 7 wird mittels einer Abbildungseinrichtung 8 auf die lichtempfindlichen Detektorelemente 14 des Detektors 9 abgebildet. Der Detektor 9 ist vorzugsweise als CCD- oder Photodiodenzeile ausgebildet.

Als Abbildungseinrichtung 8 eignen sich vorzugsweise Mikrolinsen, welche entlang einer senkrecht zur Figurenebene - und damit parallel zum zeilenförmig ausgebildeten Detektor 9 - verlaufenden Linie angeordnet sind. Alternativ eignen sich hierzu auch Gradientenindex-Linsen, insbesondere selbstfokussierende Linsen, welche ebenfalls in einer senkrecht zur Figurenebene verlaufenden Zeile angeordnet sind. Vorzugsweise werden die einzelnen Bereiche 15 durch die Abbildungseinrichtung 8 im Maßstab 1:1 auf die lichtempfindlichen Flächen 14 des Detektors 9 abgebildet.

Im gezeigten Beispiel wird der Scanner 10 mit einem nicht dargestellten Transportmechanismus in Vorschubrichtung V über die ruhende Speicherleuchtstoffschicht 1 bewegt, wobei durch die Stimulationslichtlinie 13 unterschiedliche zeilenförmige Bereiche 15 der Speicherleuchtstoffschicht 1 sukzessive angeregt werden und das jeweils ausgesandte Emissionslicht 7 von den lichtempfindlichen Detektorelementen 14 des Detektors 9 ortsaufgelöst erfasst wird.

Vorzugsweise ist die Lichtquelle 4 bezüglich der Vorschubrichtung V vor dem Detektor 9 angeordnet, d.h. der Scanner 10 läuft mit der Lichtquelle 4 voraus über die Speicherleuchtstoffschicht 1. Hierdurch wird erreicht, dass ein größerer Anteil des in der Speicherleuchtstoffschicht gestreuten Stimulationslichts 3 in Richtung bereits ausgelesener Bereiche 15 gestreut wird, während nur ein kleinerer Anteil des Stimulationslichts 3 in Richtung noch nicht ausgelesener Bereiche 15 der Speicherleuchtstoffschicht 1 gestreut wird. Dadurch können Intensitäts- und Schärfeverluste aufgrund einer Streuung von Stimulationslicht 3 innerhalb der Speicherleuchtstoffschicht 1 vermindert werden.

Im dargestellten Beispiel wird der Scanner 10 über eine ortsfeste Speicherleuchtstoffschicht 1 bewegt. Die obigen Ausführungen gelten selbstverständlich aber auch dann, wenn der Scanner 10 ortsfest ist und die auf der Trägerschicht 2 befindliche Speicherleuchtstoffschicht 1 in Bewegungsrichtung P relativ zu diesem transportiert wird. Dasselbe gilt analog für Ausgestaltungen, bei denen sowohl der Scanner 10 in Vorschubrichtung V als auch die Speicherleuchtstoffschicht 1 in Bewegungsrichtung P bewegt werden.

Während der Scanner 10 in Vorschubrichtung V relativ zur Speicherleuchtstoffschicht 1 bewegt wird, überstreicht die Stimulationslichtlinie 13 einzelne Bereiche 15 der Speicherleuchtstoffschicht 1 und regt diese nacheinander zur Aussendung von Emissionslicht 7 an, welches vom Detektor 9 für jeden der einzelnen Bereiche 15 erfasst wird.

Der Detektor 9 benötigt für die Bewegung um die Breite eines Bereichs 15 eine Vorschubdauer T_{V}. Im Verlauf dieser Bewegung erfassen die lichtempfindlichen Flächen 14 des Detektors 15 während einer Integrationsdauer T_{I} das von dem Bereich 15 ausgesandte Emissionslicht 7.

Die Breite der Bereiche 15 in Vorschubrichtung V liegt typischerweise zwischen etwa 10 µm und 500 µm. Die Querausdehnung der lichtempfindlichen Flächen 14 des Detektors 9 senkrecht zur Richtung der Detektorzeile liegt typischerweise zwischen etwa 10 µm und 600 µm.

Vorzugsweise ist die Querausdehnung der lichtempfindlichen Flächen 14 größer als die Breite der Bereiche 15 in Vorschubrichtung V. Beispielsweise liegt die Breite der Bereiche 15 bei etwa 50 µm, während die Querausdehnung der lichtempfindlichen Flächen 14 bei etwa 400 µm liegt. Die Breite eines einzelnen Bereichs 15 in Vorschubrichtung V ist in diesem Fall durch die Breite des Abschnitts der Speicherleuchtstoffschicht 1 gegeben, den die Stimulationslichtlinie 13 während ihres Vorschubs in Vorschubrichtung V innerhalb der Vorschubdauer Tᵥ zur Aussendung von Emissionslicht 7 anregt. Die Ortsauflösung in Vorschubrichtung V, d.h. die kleinstmögliche Breite eines einzelnen Bereichs 15, wird hierbei durch die Breite des Fokusbereichs der Stimulationslichtlinie 13 in Vorschubrichtung V bestimmt.

Zur besseren Veranschaulichung sind die Bereiche 15 der Speicherleuchtstoffschicht 1 und die lichtempfindlichen Flächen 14 des Detektors 9 in Fig. 1 jeweils stark vergrößert und nicht maßstabsgetreu dargestellt.

Vorteilhafterweise ist die Integrationsdauer T_{I} kürzer als die Vorschubdauer T_{V}, d.h. T_{I} < T_{V}. Dadurch wird das thermisch generierte Dunkelrauschen gegenüber aus dem Stand der Technik bekannten Verfahren vermindert und damit insgesamt das Signal/Rausch-Verhältnis verbessert. Da der Detektor 9 bei der Erfassung des Emissionslichts 7 während der Integrationsdauer T_{I} nur einen Teil der Breite des Bereichs 15 überstreicht, werden darüber hinaus Informationsverluste, die durch die sog. Bewegungsunschärfe verursacht werden, vermindert.

Fig. 2 zeigt ein Beispiel für eine auszulesende Speicherleuchtstoffschicht 1 in Draufsicht. Auch in der hier gewählten Darstellung sind - wie bei Fig. 1 ― die einzelnen Bereiche 15 der Speicherleuchtstoffschicht 1 aus Gründen einer besseren Anschaulichkeit stark vergrößert dargestellt.

Auf der Speicherleuchtstoffschicht 1 ist eine Stimulationslichtlinie 13 eingezeichnet, welche mit der Lichtquelle 4 und dem Detektor 9 einschließlich Abbildungseinrichtung 8 und Filter 11 (siehe Fig. 1) in Vorschubrichtung V relativ zur Speicherleuchtstoffschicht 1 bewegt wird und dabei die einzelnen Bereiche 15 überstreicht. Für den Vorschub um die Breite eines Bereichs 15 benötigt der Detektor 9 bzw. die Stimulationslichtlinie 13 eine bestimmte Vorschubdauer T_{V}, welche - im Falle einer konstanten Relativgeschwindigkeit - dem Quotienten aus der Breite Bᵥ der einzelnen Bereiche 15 und der Relativgeschwindigkeit entspricht.

Die Lichtquelle 4 ist in der Weise gesteuert, dass lediglich jeweils ein erster Teilbereich 16 der Bereiche 15 direkt mit Stimulationslicht bestrahlt wird, wohingegen ein zweiter Teilbereich 17 der Bereiche 15 nicht direkt mit Stimulationslicht bestrahlt wird. Die Lichtquelle 4 sendet hierbei nur dann Stimulationslicht aus, wenn die Stimulationslichtlinie 13 den ersten Teilbereich 16 überstreicht. Anschließend wird die Lichtquelle 4 ausgeschaltet, so dass eine nunmehr "virtuelle Stimulationslichtlinie" den zweiten Teilbereich 17 überstreicht, ohne diesen mit Stimulationslicht zu bestrahlen. Dementsprechend wird lediglich der erste Teilbereich 16 durch direkte Bestrahlung mit Stimulationslicht zur Aussendung von Emissionslicht angeregt. Der zweite Teilbereich 17 dagegen wird durch das auf den ersten Teilbereich 16 treffende und in der Speicherleuchtstoffschicht 1 teilweise in Vorschubrichtung V gestreute Stimulationslicht zur Aussendung von Emissionslicht angeregt.

Die Steuerung der Lichtquelle 4 erfolgt hierbei durch Vorgabe einer Stimulationsdauer T_{S}, während der die Lichtquelle 4 bei der Bewegung der Stimulationslichtlinie 13 über einen Bereich 15 eingeschaltet ist. Die Lichtquelle 4 bleibt nach Ablauf der Stimulationsdauer T_{S} dann solange ausgeschaltet, bis die Stimulationslichtlinie 13 einen als nächstes auszulesenden Bereich 15 erreicht hat, bei welchem der beschriebene Bestrahlungszyklus durch Einschalten der Lichtquelle 4 von Neuem beginnen kann.

Die von der Ausdehnung der lichtempfindlichen Flächen 14 des Detektors 9 sowie von der Abbildungseinrichtung 8 abhängende Apertur des Detektors 9 überstreicht dabei ebenfalls die einzelnen angeregten Bereiche 15 der Speicherleuchtstoffschicht 1 nacheinander. Die in einer Zeile angeordneten lichtempfindlichen Flächen 14 des Detektors 9 erfassen dabei das von den zeilenförmigen Bereichen 15 jeweils ausgesandte Emissionslicht 7.

Der Detektor 9 ist dabei in der Weise gesteuert, dass dieser nur während einer Integrationsdauer T_{I} das vom Bereich 15 ausgesandte Emissionslicht 7 erfasst. Die Integrationsdauer T_{I} ist hierbei kürzer als die Vorschubdauer T_{V}, welche der Detektor 9 bzw. die Lichtquelle 4 benötigt, um eine der Breite Bᵥ der Bereiche 15 entsprechende Wegstrecke in Vorschubrichtung V zurückzulegen. Die Integrationsdauer T_{I} ist vorzugsweise mit der Stimulationsdauer T_{S} synchronisiert, d.h. diese beginnen zu demselben Zeitpunkt und haben dieselbe Dauer.

Gegenüber den aus dem Stand der Technik bekannten Verfahren, bei welchen die Integrationsdauer mit der Vorschubdauer identisch ist, führt die hier beschriebene Verkürzung der Integrationsdauer gegenüber der Vorschubdauer zu einem deutlich reduzierten Dunkelrauschen. Da die Apertur des Detektors 9 bei der Erfassung des Emissionslichts während der kürzeren Integrationsdauer folglich einen in Vorschubrichtung V schmaleren Abschnitt des Bereichs 15 überstreicht, wird gleichzeitig die Bewegungsunschärfe und damit ein daraus resultierender Informationsverlust beim Auslesen vermindert.

Wie in Fig. 2 außerdem zu erkennen ist, sind die einzelnen Bereiche 15 jeweils in eine Vielzahl einzelner Bildpunkte 18 unterteilt. Diese Unterteilung wird durch die Erfassung des von den zeilenförmigen Bereichen 15 ausgesandten Emissionslichts mit einem zeilenförmig ausgebildeten Detektor 9 erreicht, wobei die Breite B_{z} der Bildpunkte 18 der Ausdehnung der einzelnen lichtempfindlichen Detektorelemente 14 in Zeilenrichtung des Detektors 9 entspricht. Die Breite B_{z} der Bildpunkte 18 liegt typischerweise zwischen etwa 10 µm und 500 µm, vorzugsweise bei etwa 50 µm.

Das von den einzelnen Bildpunkten 18 ausgesandte und von den entsprechenden lichtempfindlichen Flächen 14 des Detektors 9 zeilenweise erfasste Emissionslicht 7 wird im Detektor 9 in entsprechende Detektorsignale umgewandelt, welche die Bildinformationen des ausgelesenen latenten Röntgenbildes repräsentieren.

Das Auslesen der Speicherleuchtstoffschicht 1 wird vorzugsweise durch ein Pulssignal gesteuert. Das Pulssignal weist einen periodischen Verlauf einzelner Rechteckpulse auf, deren Pulsdauer der Stimulationsdauer T_{S} bzw. der Integrationsdauer T_{I} entspricht. Der zeitliche Abstand zwischen den aufsteigenden Flanken zweier aufeinander folgender Pulse entspricht hierbei der Vorschubdauer T_{V}. Bei dem periodischen Pulssignal dieses Beispiels entspricht die Vorschubdauer Tᵥ somit der Periodendauer des Pulssignals.

Vorzugsweise sind, wie bereits erläutert, Stimulationsdauer T_{S} und Integrationsdauer T, identisch, d.h. die Anregung und Erfassung des Emissionslichts erfolgen synchron. Alternativ ist es aber auch möglich, den Auslesevorgang mit zwei verschiedenen Pulssignalen zu steuern, die sich in der Dauer der Pulse (d.h. die Stimulationsdauer T_{S} ist dann von der Integrationsdauer T_{I} verschieden) und/oder der Phasenlage der Pulse relativ zueinander (d.h. die Stimulationsdauer T_{S} beginnt zu einem anderen Zeitpunkt als die Integrationsdauer T_{I}) unterscheiden.

Bei dieser Variante des Scanners 10 wird zumindest ein Teil der Scanparameter des Scanners 10 beim Auslesen in Abhängigkeit von der Dicke d der auszulesenden Speicherleuchtstoffschicht 1 gewählt oder von einer Auslesesteuerung (nicht dargestellt) eingestellt. Alternativ oder zusätzlich kann zumindest ein Teil der Scanparameter in Abhängigkeit von dem Körperteil, dessen Röntgenaufnahme in der auszulesenden Speicherleuchtstoffschicht gespeichert ist, eingestellt werden.

Als Scanparameter sind hierbei vorzugsweise einer oder mehrere der folgenden, vorstehend bereits näher beschriebenen Parameter zu verstehen:
- die Größe, d.h. die Breite B_{z} bzw. B_{V}, der Bildpunkte 18 des ausgelesenen Röntgenbildes;
- die Stimulationsdauer T_{S} bzw. die Pulsdauer der Stimulationslichtpulse;
- die Intensität des Stimulationslichts 3;
- die Breite des Fokusbereichs 13 des Stimulationslichts 3 auf der Speicherleuchtstoffschicht 1;
- die Integrationsdauer T_{I} des Detektors 9;
- die Vorschubdauer Tᵥ des Detektors 9 bzw. die Relativgeschwindigkeit, mit welcher der Scanner 10 und die Speicherleuchtstoffschicht 1 während des Auslesens relativ zueinander bewegt werden.

Das Auslesen einer Speicherleuchtstoffschicht 1 mit einer ersten Dicke d erfolgt hierbei mit anderen Scanparametern als das Auslesen einer Speicherleuchtstoffschicht 1 mit einer zweiten Dicke d, welche größer ist als die erste Dicke d.

Alternativ oder zusätzlich erfolgt das Auslesen einer Speicherleuchtstoffschicht 1, in welcher eine Röntgenaufnahme eines ersten Körperteils, wie z.B. einer Extremität oder eines Schädels, gespeichert ist, mit anderen Scanparametern als das Auslesen einer Speicherleuchtstoffschicht 1, in welcher eine Röntgenaufnahme eines zweiten Körperteils, wie z.B. einer Wirbelsäule, eines Thorax, Abdomens oder Beckens, gespeichert ist.

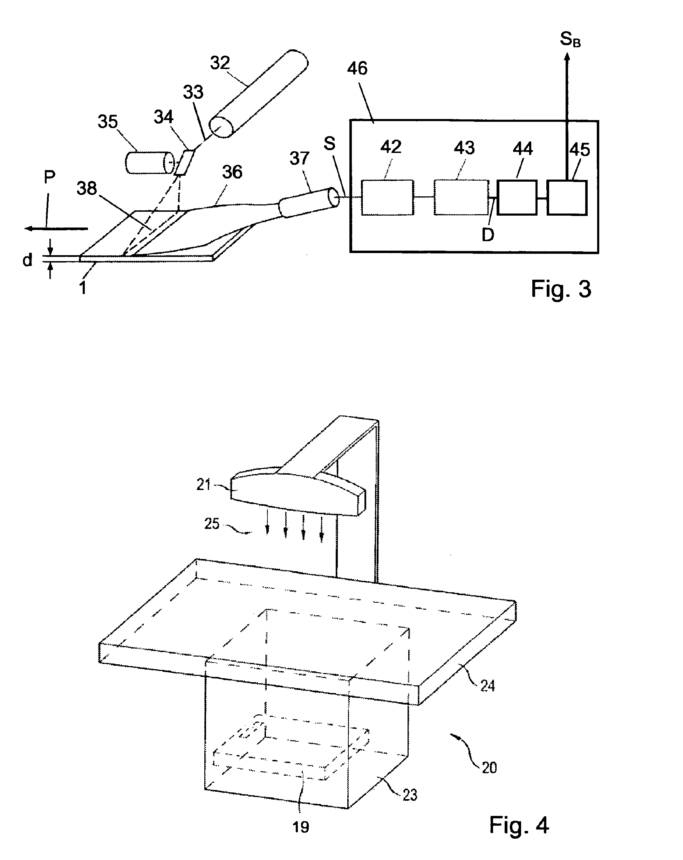

Fig. 3 zeigt eine zweite Variante einer Auslesevorrichtung zum Auslesen einer Speicherleuchtstoffschicht 1. Durch einen Laser 32 wird ein Stimulationslichtstrahl 33 erzeugt, welcher durch ein von einem Motor 35 in Rotation versetztes Ablenkelement 34 derart abgelenkt wird, dass sich dieser entlang einer Zeile 38 über die auszulesende Speicherleuchtstoffschicht 1 bewegt. Das Ablenkelement 34 ist vorzugsweise als Spiegel, insbesondere als Polygonspiegel oder Galvanometerspiegel, ausgebildet.

Während der Bewegung des Stimulationslichtstrahls 33 entlang der Zeile 38 sendet die Speicherleuchtstoffschicht 1 in Abhängigkeit der darin gespeicherten Röntgeninformation Emissionslicht aus, welches von einer optischen Sammeleinrichtung 36, beispielsweise einem Lichtleiterbündel, gesammelt, weitergeleitet und von einem an die Sammeleinrichtung 36 gekoppelten optischen Detektor 37, vorzugsweise einem Photomultiplier, erfasst und in ein entsprechendes analoges Detektorsignal S umgewandelt wird.

Das Detektorsignal S wird einer Verarbeitungseinrichtung 46 zugeführt, in welcher Bildsignalwerte S_{B} für einzelne Bildpunkte des ausgelesenen Röntgenbildes abgeleitet werden. Durch einen Transport der Speicherleuchtstoffschicht 1 in Transportrichtung P wird ein sukzessives Auslesen einzelner Zeilen 38 erreicht und damit ein zweidimensionales, aus einzelnen Bildpunkten mit jeweils einem zugehörigen Bildsignalwert S_{B} bestehendes Röntgenbild erhalten. Beträgt die Anzahl der in Transportrichtung V ausgelesenen Zeilen 38 beispielsweise 1500, so werden mit beispielsweise jeweils 1000 Bildpunkten pro Zeile 38 für das ausgelesene Röntgenbild insgesamt 1500 x 1000 Bildpunkte mit jeweils einem zugehörigen Bildsignalwert S_{B} erhalten.

Das analoge Detektorsignal S wird in dem hier dargestellten Ausführungsbeispiel zunächst durch ein Tiefpassfilter 42 gefiltert, wobei höherfrequente Anteile des Detektorsignals S, insbesondere Rauschanteile, eliminiert oder zumindest reduziert werden. Das gefilterte, analoge Detektorsignal S wird einer Digitalisierungseinrichtung 43 zugeführt und dort mit einer vorgegebenen Abtastfrequenz abgetastet und digitalisiert, wobei pro Abtastvorgang ein digitaler Detektorsignalwert D in digitalen Einheiten erhalten wird. Die Abtastfrequenz, welche auch als Samplingrate bezeichnet wird, liegt typischerweise zwischen 1 und 12 MHz.

Das Abtasten des analogen Detektorsignals S in der Digitalisierungseinrichtung 43 erfolgt vorzugsweise nach dem sog. Sample and Hold-Prinzip, bei welchem die jeweils aktuelle analoge Signalhöhe des zu einem Abtastzeitpunkt an der Digitalisierungseinrichtung 43 anliegenden Detektorsignals S gehalten und in einen entsprechenden digitalen Detektorsignalwert D umgewandelt wird.

Aus den in einem Speicher 44 zwischengespeicherten digitalen Detektorsignalwerten D werden schließlich in einer Recheneinheit 45 die einzelnen Bildsignalwerte S_{B} ermittelt, indem z.B. zwei oder mehrere Detektorsignalwerte D zu einem Bildpunkt zusammengefasst werden und daraus - beispielsweise durch Mittelwertbildung - ein zu diesem Bildpunkt gehörender Bildsignalwert S_{B} berechnet wird.

Die Abtastfrequenz ist vorzugsweise so gewählt, dass für jeden einzelnen Bildpunkt entlang der Zeile 38 mindestens zwei digitale Detektorsignalwerte D erhalten werden, aus welchen ein jeweils zu einem Bildpunkt gehörender Bildsignalwert S_{B} errechnet werden kann.

Auch bei dieser Variante der erfindungsgemäßen Auslesevorrichtung wird zumindest ein Teil der Scanparameter in Abhängigkeit von der Dicke d der auszulesenden Speicherleuchtstoffschicht 1 gewählt oder von einer Auslesesteuerung (nicht dargestellt) eingestellt. Alternativ oder zusätzlich kann zumindest ein Teil der Scanparameter in Abhängigkeit von dem Körperteil, dessen Röntgenaufnahme in der auszulesenden Speicherleuchtstoffschicht gespeichert ist, eingestellt werden.

Als Scanparameter sind hierbei vorzugsweise einer oder mehrere der folgenden, vorstehend bereits beschriebenen Parameter zu verstehen:
- die Größe der Bildpunkte des ausgelesenen Röntgenbildes;
- die Intensität des Stimulationslichts 33;
- die Breite des Fokusbereichs, d.h. der Zeile 38 des Stimulationslichts 33 auf der Speicherleuchtstoffschicht 1;
- die Abtastfrequenz oder Samplingrate beim Abtasten des analogen Detektorsignals S; und
- die Relativgeschwindigkeit, mit welcher die Speicherleuchtstoffschicht 1 während des Auslesens relativ zur Zeile 38 des Stimulationslichts bewegt wird.
   Das Auslesen einer Speicherleuchtstoffschicht 1 mit einer ersten Dicke d erfolgt hierbei mit anderen Scanparametern als das Auslesen einer Speicherleuchtstoffschicht 1 mit einer zweiten Dicke d, welche größer ist als die erste Dicke d.

Alternativ oder zusätzlich erfolgt das Auslesen einer Speicherleuchtstoffschicht 1, in welcher eine Röntgenaufnahme eines ersten Körperteils, wie z.B. einer Extremität oder eines Schädels, gespeichert ist, mit anderen Scanparametern als das Auslesen einer Speicherleuchtstoffschicht 1, in welcher eine Röntgenaufnahme eines zweiten Körperteils, wie z.B. einer Wirbelsäule, eines Thorax, Abdomens oder Beckens, gespeichert ist.

Figur 4 zeigt ein Beispiel für ein Radiographiesystem zur Aufzeichnung von Röntgenaufnahmen auf Speicherleuchtstoffschichten. In diesem Beispiel befindet sich eine - in der gewählten Darstellung nicht sichtbare - Speicherleuchtstoffschicht (wie z.B. in den Figuren 1 bis 3 dargestellt) in einer Röntgenkassette 19, welche in einem Röntgentisch 20 eingesetzt ist. Der Röntgentisch 20 umfasst einen Röntgenfuß 23, in dem sich die Röntgenkassette 19 befindet, und eine auf dem Röntgenfuß 23 angebrachte Auflagefläche 24, auf welche bei Röntgenaufnahmen Patienten oder deren Extremitäten gelegt werden können. Über der Auflagefläche 24 ist eine Röntgenstrahlungsquelle 21 angeordnet, welche Röntgenstrahlung 25 mit unterschiedlicher Energie und Intensität in Richtung auf die Auflagefläche 24 aussenden kann.

Die Grenzenergie der bei der Röntgenaufnahme verwendeten Röntgenstrahlung wird abhängig von der jeweiligen Dicke d (siehe Fig. 1 oder 3) der verwendeten Speicherleuchtstoffschicht gewählt bzw. von einer Aufzeichnungssteuerung (nicht dargestellt) entsprechend eingestellt. Hierbei wird bei einer Röntgenaufnahme unter Verwendung einer Speicherleuchtstoffschicht mit einer ersten Dicke eine erste Grenzenergie der Röntgenstrahlung eingestellt. Bei einer Röntgenaufnahme unter Verwendung einer Speicherleuchtstoffschicht mit einer zweiten Dicke, die größer ist als die erste Dicke, wird eine zweite Grenzenergie der Röntgenstrahlung eingestellt, welche größer ist als die erste Grenzenergie.

Unter der Grenzenergie der Röntgenstrahlung ist hierbei die maximale Energie der jeweiligen Röntgenphotonen zu verstehen. Der Wert der jeweiligen Grenzenergie der Röntgenphotonen, z.B. 50 keV, entspricht hierbei dem Wert der in der Röntgenröhre, in welcher die Röntgenstrahlung erzeugt wird, eingestellten Hochspannung, im genannten Beispiel also 50 kV.

Durch die Steuerung des Radiographiesystems in Abhängigkeit von der Dicke der bei der Aufzeichnung verwendeten Speicherleuchtstoffschicht wird eine verbesserte Anpassung der Aufzeichnungsbedingungen sowie der Dicke der Speicherleuchtstoffschicht an die jeweilige medizinische Anwendung, die auch Applikation genannt wird, erreicht. Auf diese Weise kann für unterschiedliche Applikationen eine jeweils optimale Bildqualität erzielt werden. Unterschiedliche Applikationen sind z.B. Röntgenaufnahmen von Extremitäten, des Schädels, der Wirbelsäule, des Thorax, des Abdomens oder des Beckens.

Vorzugsweise liegt die erste Grenzenergie der Röntgenstrahlung des Radiographiesystems im Bereich zwischen 40 und 70 keV. Bei diesen Energien wird in der ersten Speicherleuchtstoffschicht ein Röntgenbild gespeichert, welches beim Auslesen trotz der geringeren Dicke der Speicherleuchtstoffschicht eine relativ hohe Intensität des Emissionslichts und somit ein hohes Signal/Rausch-Verhältnis zu Folge hat.

Die zweite Grenzenergie der Röntgenstrahlung des Radiographiesystems liegt vorzugsweise im Bereich zwischen 70 und 150 keV. Bei diesen Energien wird in der zweiten Speicherleuchtstoffschicht ein Röntgenbild gespeichert, welches beim Auslesen wegen der größeren Dicke der Speicherleuchtstoffschicht eine ebenfalls relativ hohe Intensität des Emissionslichts und somit ein hohes Signal/Rausch-Verhältnis zu Folge hat.

Vorzugsweise ist die Intensität der Röntgenstrahlung bei einer Röntgenaufnahme unter Verwendung einer Speicherleuchtstoffschicht mit einer ersten Dicke größer als bei als bei einer Röntgenaufnahme unter Verwendung einer Speicherleuchtstoffschicht mit einer zweiten Dicke, die größer ist als die erste Dicke. Hierdurch wird eine noch bessere Anpassung der bei der jeweiligen Applikation erforderlichen Bildqualität der aufgezeichneten Röntgenaufnahme erreicht.

## Patentansprüche

1. Radiographiesystem mit einer Aufzeichnungseinrichtung (20) zur Aufzeichnung von Röntgenaufnahmen in Speicherleuchtstoffschichten (1) mittels Röntgenstrahlung (25), **gekennzeichnet durch** eine Aufzeichnungssteuerung zur Steuerung der Aufzeichnungseinrichtung (20) derart, dass die Grenzenergie der bei der Aufzeichnung einer Röntgenaufnahme verwendeten Röntgenstrahlung (25) abhängig von der jeweiligen Dicke (d) der verwendeten Speicherleuchtstoffschicht (1) eingestellt wird, so dass unter Verwendung einer Speicherleuchtstoffschicht (1) mit einer ersten Dicke (d) eine erste Grenzenergie der Röntgenstrahlung eingestellt wird, wohingegen unter Verwendung einer Speicherleuchtstoffschicht (1) mit einer zweiten Dicke (d), die größer ist als die erste Dicke (d), eine zweite Grenzenergie der Röntgenstrahlung eingestellt wird, welche größer ist als die erste Grenzenergie, wobei die erste bzw. zweite Grenzenergie der Röntgenstrahlung (25) der maximalen Energie der Röntgenphotonen im Spektrum der jeweiligen Röntgenstrahlung (25) entspricht.

2. Radiographiesystem nach Anspruch 1, wobei die erste Grenzenergie der Röntgenstrahlung (25) im Bereich zwischen 40 und 70 keV liegt.

3. Radiographiesystem nach Anspruch 1 oder 2, wobei die zweite Grenzenergie der Röntgenstrahlung (25) im Bereich zwischen 70 und 150 keV liegt.

4. Radiographiesystem nach einem der vorangehenden Ansprüche, wobei die erste Dicke (d) der ersten Speicherleuchtstoffschicht (1) zwischen 100 und 750 µm liegt.

5. Radiographiesystem nach einem der vorangehenden Ansprüche, wobei die zweite Dicke (d) der zweiten Speicherleuchtstoffschicht (1) zwischen 750 und 1000 µm liegt.

6. Radiographiesystem nach einem der vorangehenden Ansprüche, wobei die erste und/oder zweite Speicherleuchtstoffschicht (1) nadelförmige Speicherleuchtstoffstrukturen aufweist.

7. Radiographiesystem nach einem der vorangehenden Ansprüche, wobei die Aufzeichnungseinrichtung (20) durch die Aufzeichnungssteuerung derart gesteuert wird, dass
- in der ersten Speicherleuchtstoffschicht (1) eine Röntgenaufnahme mit einer ersten Intensität der Röntgenstrahlung (25) aufgezeichnet wird und
- in der zweiten Speicherleuchtstoffschicht (1) eine Röntgenaufnahme mit einer zweiten Intensität der Röntgenstrahlung (25) aufgezeichnet wird, wobei die zweite Intensität der Röntgenstrahlung (25) kleiner ist als die erste Intensität der Röntgenstrahlung (25).

8. Radiographiesystem nach einem der vorangehenden Ansprüche mit einer Auslesevorrichtung (10, 32 - 37) zum Auslesen der in den Speicherleuchtstoffschichten (1) gespeicherten Röntgenaufnahmen und einer Auslesesteuerung zur Steuerung der Auslesevorrichtung (10, 32 - 37) derart, dass
- die erste Speicherleuchtstoffschicht (1) von der in einem ersten Auslesemodus gesteuerten Auslesevorrichtung (10, 32 - 37) ausgelesen wird und
- die zweite Speicherleuchtstoffschicht (1) von der in einem zweiten Auslesemodus gesteuerten Auslesevorrichtung (10, 32 - 37) ausgelesen wird, wobei der zweite Auslesemodus von dem ersten Auslesemodus verschieden ist.

9. Radiographiesystem nach Anspruch 8, wobei die Auslesevorrichtung (10, 32 - 37) beim Auslesen einer Speicherleuchtstoffschicht (1) ein aus einer Vielzahl von Bildpunkten (18) zusammengesetztes Bild erzeugen kann, wobei die Größe (B_{z}, Bᵥ) der Bildpunkte (18) im ersten Auslesemodus kleiner ist als im zweiten Auslesemodus.

10. Radiographiesystem nach Anspruch 8 oder 9, wobei die Auslesevorrichtung (10, 32 - 37) eine Bestrahlungseinrichtung (4 - 6, 32 - 35) zur Bestrahlung einer Speicherleuchtstoffschicht (1) mit Stimulationslicht (3, 33) aufweist, welches die Speicherleuchtstoffschicht (1) zur Aussendung von Emissionslicht (7) anregen kann, und die Bestrahlungseinrichtung (4 - 6, 32 - 35) durch die Auslesesteuerung derart gesteuert wird, dass die Bestrahlungseinrichtung (4 - 6, 32 - 35) Stimulationslichtpulse mit einer bestimmten Pulsdauer (Tₛ) aussendet, wobei die Pulsdauer (Tₛ) der Stimulationslichtpulse im ersten Auslesemodus kürzer ist als im zweiten Auslesemodus.

11. Radiographiesystem nach einem der Ansprüche 8 bis 10, wobei die Auslesevorrichtung (10, 32 - 37) eine Bestrahlungseinrichtung (4 - 6, 32 - 35) zur Bestrahlung einer Speicherleuchtstoffschicht (1) mit Stimulationslicht (3, 33) aufweist, welches die Speicherleuchtstoffschicht (1) zur Aussendung von Emissionslicht (7) anregen kann, und die Bestrahlungseinrichtung (4 - 6, 32 - 35) durch die Auslesesteuerung derart gesteuert wird, dass die Intensität des Stimulationslichts (3, 33) im ersten Auslesemodus kleiner ist als die Intensität des Stimulationslichts (3, 33) im zweiten Auslesemodus.

12. Radiographiesystem nach einem der Ansprüche 8 bis 11, wobei die Auslesevorrichtung (10, 32 - 37) eine Bestrahlungseinrichtung (4 - 6, 32 - 35) zur Bestrahlung einer Speicherleuchtstoffschicht (1) mit Stimulationslicht (3, 33), welches die Speicherleuchtstoffschicht (1) zur Aussendung von Emissionslicht (7) anregen kann, und eine Fokussiereinrichtung (6) zur Fokussierung des Stimulationslichts (3, 33) auf die Speicherleuchtstoffschicht (1) aufweist, wobei das Stimulationslicht (3, 33) in einem, insbesondere linienförmigen, Fokusbereich (13, 38) auf die Speicherleuchtstoffschicht (1) trifft und die Breite des Fokusbereichs (13, 38) im ersten Auslesemodus kleiner ist als im zweiten Auslesemodus.

13. Radiographiesystem nach einem der Ansprüche 8 bis 12, wobei die Auslesevorrichtung (10, 32 - 37) einen Detektor (9, 37) zur Erfassung von in der Speicherleuchtstoffschicht (1) angeregtem Emissionslicht (7) umfasst, der Detektor (9, 37) und die Speicherleuchtstoffschicht (1) relativ zueinander bewegt werden können und der Detektor (9, 37) durch die Auslesesteuerung derart gesteuert wird, dass das Emissionslicht (7) in einer Vielzahl von Zeitintervallen (T₁) während der Relativbewegung erfasst wird, wobei die Zeitintervalle (T₁) in ersten Auslesemodus kürzer sind als im zweiten Auslesemodus.

14. Radiographiesystem nach einem der Ansprüche 8 bis 13, wobei die Auslesevorrichtung (10, 32 - 37) einen Detektor (9, 37) zur Erfassung von in der Speicherleuchtstoffschicht (1) angeregtem Emissionslicht (7) umfasst und der Detektor (9, 37) und die Speicherleuchtstoffschicht (1) mit einer Relativgeschwindigkeit relativ zueinander bewegt werden können, wobei die Relativgeschwindigkeit im ersten Auslesemodus kleiner ist als im zweiten Auslesemodus.

15. Verfahren zur Aufzeichnung von Röntgenaufnahmen in Speicherleuchtstoffschichten (1) mittels Röntgenstrahlung (25), **dadurch gekennzeichnet, dass** die Grenzenergie der bei der Aufzeichnung einer Röntgenaufnahme verwendeten Röntgenstrahlung (25) abhängig von der jeweiligen Dicke (d) der verwendeten Speicherleuchtstoffschicht (1) eingestellt wird, so dass unter Verwendung einer Speicherleuchtstoffschicht (1) mit einer ersten Dicke (d) eine erste Grenzenergie der Röntgenstrahlung eingestellt wird, wohingegen unter Verwendung einer Speicherleuchtstoffschicht (1) mit einer zweiten Dicke (d), die größer ist als die erste Dicke (d), eine zweite Grenzenergie der Röntgenstrahlung eingestellt wird, welche größer ist als die erste Grenzenergie,
wobei die erste bzw. zweite Grenzenergie der Röntgenstrahlung (25) der maximalen Energie der Röntgenphotonen im Spektrum der jeweiligen Röntgenstrahlung (25) entspricht.

## Claims

1. A radiography system with a recording device (20) for recording X-rays in phosphor layers (1) by means of X-ray radiation (25), **characterized by** a recording control for controlling the recording device (20) such that the maximum energy of the X-ray radiation (25), that is used during the recording of a radiation image, is set dependent on the respective thickness (d) of the phosphor layer (1) used, such that when a first phosphor layer (1) with a first thickness (d) is used a first maximum energy of the X-ray radiation is set, whereby when a second phosphor layer (1) with a second thickness (d), that is larger than the first thickness (d), is used a second maximum energy of the X-ray radiation, that is greater than the first maximum energy, is set, whereby the first and second maximum energy of the X-ray radiation (25) corresponds to the maximum energy of the X-ray photons in the spectrum of the respective X-ray radiation (25).

2. The radiography system according to claim 1, wherein the first maximum energy of the X-ray radiation (25) is in the range of between 40 and 70 keV.

3. The radiography system according to claim 1 or 2, wherein the second maximum energy of the X-ray radiation (25) is in the range of between 70 and 150 keV.

4. The radiography system according to any of the preceding claims, wherein the first thickness (d) of the first phosphor layer (1) is between 100 and 750 µm.

5. The radiography system according to any of the preceding claims, wherein the second thickness (d) of the second phosphor layer (1) is between 750 and 1000 µm.

6. The radiography system according to any of the preceding claims, wherein the first and/or second phosphor layer (1) comprises needle-shaped phosphor structures.

7. The radiography system according to any of the preceding claims, wherein the recording device (20) is controlled by the recording control such that:
- in the first phosphor layer (1) an X-ray with a first intensity of the X-ray radiation (25) is recorded, and
- in the second phosphor layer (1) an X-ray with a second intensity of the X-ray radiation (25) is recorded, wherein the second intensity of the X-ray radiation (25) is smaller than the first intensity of the X-ray radiation (25).

8. The radiography system according to any of the preceding claims, further comprising a read-out device (10, 32-37) for reading out the X-rays stored in the phosphor layers (1) and a read-out control for controlling the read-out device (10, 32-37) such that
- the first phosphor layer (1) is read out by the read-out device (10, 32-37) controlled in a first read-out mode, and
- the second phosphor layer (1) is read out by the read-out device (10, 32-37) controlled in a second read-out mode, the second read-out mode being different from the first read-out mode.

9. The radiography system according to claim 8, wherein the read-out device (10, 32-37) is able to produce an image made of up a plurality of pixels (18) during the read-out of a phosphor layer (1), the size (B_{z}, Bᵥ) of the pixels (18) being smaller in the first read-out mode than in the second read-out mode.

10. The radiography system according to claim 8 or 9, wherein the read-out device (10, 32-37) comprises an irradiation device (4-6, 32-35) for irradiating a phosphor layer (1) with stimulation light (3,33) which can stimulate the phosphor layer (1) into emitting emission light (7), and the irradiation device (4-6, 32-35) is controlled by the read-out control such that the irradiation device (4-6, 32-35) emits stimulation light pulses with a specific pulse duration (Tₛ), the pulse duration (Tₛ) of the stimulation light pulses being shorter in the first read-out mode than in the second read-out mode.

11. The radiography system according to any of the claims 8 to 10, wherein the read-out device (10, 32-37) comprises an irradiation device (4-6, 32-35) for irradiating a phosphor layer (1) with stimulation light (3, 33) which can stimulate the phosphor layer (1) into emitting emission light (7), and the irradiation device (4-6, 32-35) is controlled by the read-out control such that the intensity of the stimulation light (3,33) is smaller in the first read-out mode than the intensity of the stimulation light (3, 33) in the second read-out mode.

12. The radiography system according to any of the claims 8 to 11, the read-out device (10, 32-37) comprising an irradiation device (4-6, 32-35) for irradiating a phosphor layer (1) with stimulation light (3, 33) which can stimulate the phosphor layer (1) into emitting emission light (7), and a focussing device (6) for focussing the stimulation light (3, 33) onto the phosphor layer (1), the stimulation light (3, 33) hitting the phosphor layer (1) in a focus region (13, 38), which is in particular linear, and a width of the focus range (13, 38) is smaller in the first read-out mode than in the second read-out mode.

13. The radiography system according to any of the claims 8 to 12, whereby the read-out device (10, 32-37) comprises a detector (9, 37) for collecting emission light (7) stimulated in the phosphor layer (1), the detector (9, 37) and the phosphor layer (1) being moveable relative to one another, and the detector (9, 37) being controlled by the read-out control such that the emission light (7) is collected in a plurality of time intervals (T₁) during the relative movement, the time intervals (T₁) being shorter in the first read-out mode than in the second read-out mode.

14. The radiography system according to any of the claims 8 to 13, whereby the read-out device (10, 32-37) comprises a detector (9, 37) for collecting emission light stimulated in the phosphor layer (1), the detector (9, 37) and the phosphor layer (1) being moveable relative to one another with a relative speed, the relative speed being lower in the first read-out mode than in the second read-out mode.

15. A method for recording X-rays in phosphor layers (1) using X-ray radiation (25), **characterized in that** the maximum energy of the X-ray radiation (25), that is used during the recording of a radiation image, is set dependent on the respective thickness (d) of the phosphor layer (1), such that when a first phosphor layer (1) with a first thickness (d) is used a first maximum energy of the X-ray radiation is set, whereby when a second phosphor layer (1) with a second thickness (d), that is larger than the first thickness (d), is used a second maximum energy of the X-ray radiation, that is greater than the first maximum energy, is set, whereby the first and second maximum energy of the X-ray radiation (25) corresponds to the maximum energy of the X-ray photons in the spectrum of the respective X-ray radiation (25).

## Revendications

1. Un système radiographique avec un appareil d'enregistrement (20) pour enregistrer des images radiographiques dans des couches de luminophore d'emmagasinage (1) par moyen de radiation radiographique (25), **caractérisé par** un moyen de contrôle d'enregistrement pour contrôler l'appareil d'enregistrement (20) de telle façon que la limite d'énergie de la radiation radiographique utilisée pendant l'enregistrement d'une image radiographique (25) est réglée dépendant de l'épaisseur respective (d) des couches de luminophore d'emmagasinage utilisée, de telle façon que la première limite d'énergie de la radiation radiographique est réglée durant l'utilisation d'une couche de luminophore d'emmagasinage (1), d'une première épaisseur (d), et une seconde limite d'énergie de radiation radiographique est réglée durant l'utilisation d'une couche de luminophore d'emmagasinage (1) d'une seconde épaisseur (d), qui est plus grande que la première épaisseur, la seconde limite d'énergie étant supérieure à la première limite d'énergie, dans lequel la première, respectivement la deuxième limite d'énergie de la radiation radiographique (25) correspond à l'énergie maximale des photons radiographiques dans le spectre de la radiation radiographique (25).

2. Le système radiographique selon la revendication 1 dans lequel la première limite d'énergie de la radiation radiographique (25) se situe dans la marge entre 40 et 70 keV.

3. Le système radiographique selon les revendications 1 ou 2 dans lequel la seconde limite d'énergie de la radiation radiographique (25) se situe dans la marge entre 70 et 150 keV.

4. Le système radiographique selon l'une quelconque des revendications précédentes dans lequel la première épaisseur (d) de la première couche à luminophore d'emmagasinage (1) se situe entre 100 et 750 µm.

5. Le système radiographique selon l'une quelconque des revendications précédentes dans lequel la seconde épaisseur (d) de la seconde couche à luminophore d'emmagasinage (1) se situe entre 750 et 1000 µm.

6. Le système radiographique selon l'une quelconque des revendications précédentes dans lequel la première ou la seconde couche à luminophore d'emmagasinage (1) comprend des structures aciculaires de luminophore d'emmagasinage (1).

7. Le système radiographique selon l'une quelconque des revendications précédentes dans lequel l'appareil d'enregistrement (20) est contrôlé par des systèmes de contrôles des enregistrements de telle façon que :
- dans la première couche de luminophore d'emmagasinage (1) une radiation radiographique d'une première intensité de la radiation radiographique (25) est enregistré, et
- dans la seconde couche de luminophore d'emmagasinage (1) une radiation radiographique d'une seconde intensité de la radiation radiographique (25) est enregistré, dans laquelle la seconde intensité de la radiation radiographique (25) est inférieure à la première intensité de la radiation radiographique (25).

8. Le système radiographique selon l'une quelconque des revendications précédentes comprenant en plus un appareil de lecture (10, 32-37) pour lire la radiation radiographique emmagasiné dans les couches de luminophore d'emmagasinage (1) et un moyen de contrôle de lecture pour contrôler l'appareil de lecture (10,32-37) de telle façon que:
- la première couche de luminophore d'emmagasinage (1) est lue par l'appareil de lecture (10,32-37), contrôlée dans un premier mode de lecture, et
- la seconde couche de luminophore d'emmagasinage est lue par l'appareil de lecture (10,32-37) contrôlée dans un second mode de lecture, le second mode de lecture étant différent du premier mode de lecture.

9. Le système radiographique selon la revendication 8, dans lequel l'appareil de lecture (10,32-37) est capable de produire une image composée d'un grand nombre de pixels (18) durant la lecture de la couche de luminophore d'emmagasinage (1), la taille(B_{z}, Bᵥ) des pixels (18) étant inférieur dans le premier mode de lecture que dans le second mode de lecture.

10. Le système radiographique selon la revendication 8 ou 9, dans lequel l'appareil de lecture (10,32-37) comprend un appareil d'illumination (4-6, 32-35) pour illuminer une couche de luminophore d'emmagasinage (1) avec une lumière de stimulation (3,33) qui peut stimuler la couche de luminophore d'emmagasinage (1) à émettre une lumière d'émission (7), et l'appareil d'illumination (4-6, 32-35) est contrôlé par le moyen de contrôle de lecture de telle façon que l'appareil d'illumination (4-6, 32-35) émet des pulsions de lumière de stimulation d'une durée spécifique de pulsations (Tₛ), la durée de pulsation (Tₛ) des pulsations de la lumière de stimulation étant plus courte dans le premier mode de lecture par rapport au second mode de lecture.

11. Le système radiographique selon l'une quelconque des revendications 8 à 10, dans lequel l'appareil de lecture (10,32-37) comprend un appareil d'illumination (4-6, 32-35) pour illuminer une couche de luminophore d'emmagasinage (1) avec une lumière de stimulation (3,33) qui peut stimuler la couche de luminophore d'emmagasinage (1) à émettre une lumière d'émission (7), et l'appareil d'illumination (4-6, 32-35) est contrôlé par le moyen de contrôle de lecture de telle façon que l'intensité de la lumière de stimulation (3, 33) est inférieure dans le premier mode de lecture par rapport à l'intensité de la lumière de stimulation (3,33) dans le second mode de lecture.

12. Le système radiographique selon l'une quelconque des revendications 8 à 11, dans lequel l'appareil de lecture (10,32-37) comprend un appareil d'illumination (4-6, 32-35) pour illuminer une couche de luminophore d'emmagasinage (1) avec une lumière de stimulation (3,33) qui peut stimuler la couche de luminophore d'emmagasinage (1) à émettre une lumière d'émission (7), et un moyen de focalisation (6), pour focaliser la lumière de stimulation (3,33) à la couche de luminophore d'emmagasinage (1), la lumière de stimulation (3,33) s'introduisant dans la couche de luminophore d'emmagasinage (1) dans une région de focalisation (13,38), qui en particulier est linéaire, et la largeur de la portée de focalisation (13,38) est inférieur dans le premier mode de lecture par rapport au second mode de lecture.

13. Le système radiographique selon l'une quelconque des revendications 8 à 12, dans lequel l'appareil de lecture (10,32-37) comprend un détecteur (9,37) pour collecter la lumière d'émission (7) stimulée dans la couche de luminophore d'emmagasinage (1), le détecteur (9,37) et la couche de luminophore d'emmagasinage (1) étant mobile l'une par rapport à l'autre, et le détecteur (9,37) étant contrôlé par le moyen de contrôle de lecture de telle façon que la lumière d'émission (7) est collectée dans un grand nombre d'intervalles de temps (T₁), durant le mouvement relatif, les intervalles de temps (T₁) étant plus courts dans le premier mode de lecture par rapport au second mode de lecture.

14. Le système radiographique selon l'une quelconque des revendications 8 à 13, dans lequel l'appareil de lecture (10,32-37) comprend un détecteur (9,37) pour collecter la lumière d'émission (7) stimulée dans la couche de luminophore d'emmagasinage (1), le détecteur (9,37) et la couche de luminophore d'emmagasinage (1) étant mobile l'une par rapport à l'autre à une vitesse relative, la vitesse relative étant inférieure dans le premier mode de lecture par rapport au second mode de lecture.

15. Un procédé d'enregistrement d'images radiographiques dans des couches de luminophores d'emmagasinage (1) par moyen de radiation radiographique (25), **caractérisé par** ce que la limite d'énergie de la radiation radiographique (25) utilisée pendant l'enregistrement d'une image radiographique est réglée dépendant de l'épaisseur respective (d) des couches de luminophore d'emmagasinage (1) utilisée de telle façon que la première limite d'énergie de la radiation radiographique est réglée durant l'utilisation d'une couche de luminophore d'emmagasinage (1), d'une première épaisseur (d), et une seconde limite d'énergie de radiation radiographique est réglée durant l'utilisation d'une couche de luminophore d'emmagasinage (1) d'une seconde épaisseur (d), qui est plus grande que la première épaisseur, la seconde limite d'énergie étant supérieure à la première limite d'énergie, dans lequel la première, respectivement la deuxième limite d'énergie de la radiation radiographique (25) correspond à l'énergie maximale des photons radiographiques dans le spectre de la radiation radiographique (25).
